# EUROPEAN PATENT SPECIFICATION

(11) **EP 1 448 663 B1**
(45) Date of publication and mention of the grant of the patent: **15.07.2009**
(21) Application number: 02790396.2
(22) Date of filing: 18.11.2002
(51) Int. Cl.: C08G 65/26

(54) **PROCESS FOR THE ALKOXYLATION OF ORGANIC COMPOUNDS**
VERFAHREN ZUR ALKOXYLIERUNG VON ORGANISCHEN VERBINDUNGEN
PROCEDE D'ALCOXYLATION DE COMPOSES ORGANIQUES

(30) Priority: 19.11.2001 EP 01309728
(43) Date of publication of application: 25.08.2004
(73) Proprietor: SHELL INTERNATIONALE RESEARCH MAATSCHAPPIJ B.V., 2596 HR Den Haag (NL)
(72) Inventor: ELEVELD, Michiel, Barend, NL-1031 CM Amsterdam (NL); MEURS, Jan, Hermen, Hendrik, NL-1031 CM Amsterdam (NL)
(86) International application number: PCT/EP2002/012896
(87) International publication number: WO 2003/044074

(56) References cited:
- EP-A- 0 289 159
- WO-A-01/72418
- US-A- 2 293 868
- US-A- 4 456 697

## Description

The present invention relates to a process comprising contacting an initiator with alkylene oxide in the presence of a catalyst.

### Background of the invention

Processes comprising contacting initiator with alkylene oxide in the presence of a catalyst, are widely known. The alkylene oxide can in principle be any alkylene oxide such as ethylene oxide, propylene oxide and butylene oxide. However, the alkylene oxides commercially most frequently used are propylene oxide and ethylene oxide. The products obtained are so-called poly(alkylene oxide) polymers, also referred to as polyether polyols. Conventionally, basic catalysts like potassium hydroxide are used in the preparation of polyoxyalkylene polyether products. Additionally, double metal cyanide (DMC) catalysts have become known in the art. DMC catalysts have been found to be especially advantageous in the continuous preparation of alkylene oxide reaction products.

In a DMC catalysed process, it generally is advantageous to use an initiator, preferably a hydroxyl-group containing initiator, which has already been reacted with alkylene oxide. Hereinafter, such compounds will be called alkoxylated initiators. These alkoxylated initiators are generally prepared with the help of a potassium hydroxide catalyst. However, the potassium hydroxide catalyst must be removed from the alkoxylated initiator before it is used as an initiator for a DMC-catalyzed polyol preparation because even traces of basic substances can deactivate DMC catalysts.

It is known that polyether polyols prepared from alkylene oxides such as propylene oxide or mixtures of ethylene oxide and propylene oxide, can be made more reactive for specific reactions by subsequently reacting such polyether polyols with ethylene oxide. This technique is generally called ethylene oxide tipping. The polyether polyols obtained are suitable for use in processes such as hot-cure moulding or cold-cure moulding. Conventionally, ethylene oxide tipping has been carried out with KOH as catalyst. However, it was found that ethylene oxide tipping of polyether polyols prepared with the help of DMC catalyst requires deactivation of the DMC catalyst by addition of an excess of aqueous KOH, removal of water, addition of ethylene oxide, neutralisation with phosphoric acid and removal of the potassium phosphate formed. The use of DMC catalyst for ethylene oxide tipping of polyether polyols prepared with DMC catalyst is difficult as the DMC catalyst tends to lead to homopolymerization of the ethylene oxide thereby producing ethylene oxide polymers.

US-A-4,456,697 teaches the use of catalysts comprising mixtures of hydrogen fluoride and metal alkoxides and mixed alkoxides, for the production of alkoxylated organic compounds having a very sharply peaked alkoxylate distribution in the adducted product.

### Summary of the invention

Surprisingly, it has now been found that hydrogen fluoride and double metal cyanide (DMC) catalysts each give good catalytic activity in the presence of the other.

Therefore, the present invention relates to a process comprising contacting initiator with alkylene oxide in the presence of hydrogen fluoride and a double metal cyanide complex catalyst.

An especially advantageous process comprises the use of hydrogen fluoride catalysts in the preparation of alkoxylated initiator, which alkoxylated initiator is subsequently contacted with alkylene oxide in the presence of DMC catalyst. It was found that hydrogen fluoride catalyses the preparation of the alkoxylated initiator while not negatively affecting DMC catalyst which is present in this subsequent process. The hydrogen fluoride catalyst does not need to be removed before the alkoxylated initiator is reacted with DMC catalyst.

Further, it was found that polyether polyols prepared with the help of DMC catalyst can subsequently be reacted with ethylene oxide without the need for removal of the DMC catalyst if the ethylene oxide reaction is catalysed by a hydrogen fluoride.

### Detailed discussion of the invention

In the process according to the present invention, hydrogen fluoride is present. The hydrogen fluoride can be added as such or can be formed in-situ. Hydrogen fluoride can be formed in-situ for example by the use of compounds from which hydrogen fluoride can be separated off at reaction conditions. Preferably, the hydrogen fluoride is added as such to the process of the present invention.

The hydrogen fluoride is present in such amount that it catalyses the reaction of the initiator with the one or more alkylene oxides. The amount needed to catalyse the reaction depends on the further reaction circumstances such as the initiator used, the alkylene oxide present, the reaction temperature, further compounds which are present and which may react as cocatalyst, and the desired product. Generally, the hydrogen fluoride will be present in an amount of from 0.0005 to 10 %wt, more preferably of from 0.001 to 5 %wt, more preferably of from 0.002 to 1 %wt, based on total amount of initiator and alkylene oxide.

It has been found that the process according to the present invention can be improved even further by the additional presence of compounds comprising at least one element chosen from Group 3a, 4a and 4b of the Periodic Table of the Elements (CRC Handbook of Chemistry and Physics, 63rd Edition, 1982-1983).. It is thought that these compounds act as co-catalysts. It was found that the presence of such compounds gives an increased yield of alkylene oxide converted per gram of hydrogen fluoride. Carbon can be present in the compounds but does not need to be present, as both organic and inorganic compounds were found which improved the performance of the hydrogen fluoride. Preferred compounds comprise at least one element chosen from the group consisting of boron, silicon, titanium and aluminium. Preferred compounds act as Lewis acids with respect to hydrogen fluoride. Therefore, a preferred group of compounds present in addition to hydrogen fluoride, are compounds accepting an electron pair from hydrogen fluoride. Preferably, these compounds furthermore comprise at least one element chosen from Group 3a, 4a and 4b of the Periodic Table of the Elements (CRC Handbook of Chemistry and Physics, 63rd Edition, 1982-1983), besides the optional presence of carbon. Specific compounds giving good results were found to be boric acid, silica gel, glass, titanium(IV)methoxide, aluminium(III)isopropoxide, alkylsilicates and alkylborates. Preferably, a compound is present comprising boron and/or silicon. Most preferably, a compound containing boron is present as such compounds were found to give the highest increase in activity of the hydrogen fluoride. Preferred organic compounds comprising boron and/or silicon are chosen from the group of compounds consisting of silicon hydrides contacted with one or more organic compounds and boron containing acids contacted with one or more organic compounds.

Typically, in the process according to the present invention the initiator is contacted with alkylene oxide at a temperature of from 10 to 150 °C, more particularly from 50 to 150 °C, more particularly of from 80 to 130 °C. The process is generally applied at atmospheric pressure or higher pressure. Usually, the pressure will not exceed 20 bar and preferably is of from 1 to 5 bar. Specifically, the initiator is contacted with alkylene oxide at a temperature of from 10 to 150 °C and at a pressure of from atmospheric pressure to not more than 20 bar.

The process according to the present invention may be carried out in the presence or in the absence of an inert solvent. Suitable inert solvents are heptane, cyclohexane, toluene, xylene, diethyl ether, dimethoxyethane and/or chlorinated hydrocarbon (such as methylene chloride, chloroform or 1,2-dichloro-propane). The solvent, if used, is generally used in an amount of from 10 to 30%.

The reaction times range from a few minutes to several days, preferably a few hours.

The process can be carried out continuously, in a batch process or in a semi-batch process.

The alkylene oxide for use in the process according to the present invention, can in principle be any alkylene oxide. The alkylene oxide can be any compound containing an epoxy group. Examples of suitable alkylene oxides are glycidol, glycidyl ethers, glycidyl esters and epichlorohydrine. Preferably, the alkylene oxide comprises of from 2 to 100 carbon atoms, preferably of from 2 to 10 carbon atoms, more preferably of from 2 to 6 carbon atoms, more preferably of from 2 to 4 carbon atoms. Preferred alkylene oxides for use in the present invention are ethylene oxide, propylene oxide, butene oxide, styrene oxide, epoxy resins, and mixtures thereof. For most applications, it is preferred that the alkylene oxide is propylene oxide and/or ethylene oxide.

A wide range of initiators can be used in the process according to the present invention. Preferably, the initiator is a hydroxyl group-containing initiator. Hydroxyl group-containing initiators which are generally used are compounds containing at least 1 active hydrogen atom. Preferred hydroxyl group-containing initiators are water and organic compounds containing on average at least 1 hydroxyl group. Preferably, the hydroxyl group-containing initiators are organic compounds containing of from 1 to 10 hydroxyl groups. Examples of preferred hydroxyl group-containing initiators are water, glycol, such as ethylene glycol, propylene glycol, diethylene glycol, dipropylene glycol, glycerol, di- and polyglycerols, pentaerythritol, trimethylolpropane, triethanolamine, sorbitol, carbohydrates such as sucrose, polyvinyl alcohols, copolymers of polyvinyl alcohol and ethene, phenol, phenol derivatives and mannitol.

If the process according to the present invention is to be used for preparing polyether polyols, the hydroxyl-group containing initiator is preferably an initiator as conventionally used for that specific kind of polyether polyol. These initiators are well known to someone skilled in the art.

Furthermore, the initiator can be an alkoxylated initiator as described above which initiator has been contacted with one or more alkylene oxides. This initiator can be either an oligomer or a polymer. A polyether polyol initiator prepared with the help of DMC catalyst is especially suitable for use in a process in which the polyether polyol is contacted with ethylene oxide, optionally in combination with a cyclic ether compound containing at least 3 carbon atoms in the ring structure, in the presence of hydrogen fluoride. The cyclic ether compound containing at least 3 carbon atoms in the ring structure preferably contains of from 3 to 6 carbon atoms in the ring structure. Preferably, the cyclic ether compound containing at least 3 carbon atoms in the ring structure is tetrahydrofuran.

The polyether polyol initiator preferably has been prepared with the help of DMC catalyst. Such polyether polyol generally contains of from 5 to 100 ppm of DMC catalyst, more specifically of from 5 to 60 ppm of DMC catalyst. The polyether polyol initiator preferably is a compound obtained by contacting one or more compounds chosen from the group consisting of diethylene glycol, dipropylene glycol, glycerol, di- and polyglycerols, pentaerythritol, trimethylolpropane, sorbitol and mannitol, with propylene oxide or a mixture of propylene oxide and ethylene oxide in the presence of DMC catalyst. The molecular weight of such polyether polyol initiator preferably is of from 1000 to 100,000, more specifically of from 1,000 to 50,000, most specifically of from 2,000 to 10,000.

More specifically, the present invention comprises a process comprising (a) contacting initiator with alkylene oxide in the presence of a double metal cyanide complex catalyst, and (b) contacting the product of step (a) with alkylene oxide in the presence of hydrogen fluoride. The process according to the present invention makes it possible to send to step (b) the product directly obtained from step (a). With "the product directly obtained from step (a)" is meant that the reaction product of step (a) is not materially changed before being reacted in step (b), such as by removal of catalyst or other purification methods. However, the product obtained in step (a) can have been stored for some time after preparation before being contacted further in step (b).

Reactions of alkylene oxide in the presence of DMC catalyst are well known in the art. Such processes generally comprise contacting starter and alkylene oxide in the presence of a DMC catalyst for example as described in EP-A-090444 and EP-A-090445. DMC catalysts are well known in the art. It has been found that in the present invention in principle any DMC catalyst can be used which is known to be suitable for processes in which alkylene oxide is contacted with a starter.

Generally, DMC catalysts prepared according to the prior art and suitable for use in polymerization of alkylene oxides, exhibits a powder x-ray diffraction pattern exhibiting no detectable signals corresponding to highly crystalline zinc hexacyanocobaltate at about (d-spacing, angstroms) 5.07. More specifically, such DMC catalysts generally exhibit a powder x-ray diffraction pattern of (d-spacing, angstroms): 4.82 (br), 3.76 (br) and exhibits no detectable signals corresponding too highly crystalline zinc hexacyanocobaltate at about (d-spacing, angstroms): 5.07, 3.59, 2.54 and 2.28.

A process by which the DMC catalyst for use in the present invention can be prepared, has been described in Japanese application 4-145123. The catalyst which is prepared is a bimetallic cyanide complex having tertiary butanol coordinated as organic ligand. The bimetallic cyanide complex catalyst is prepared by mixing together aqueous solutions, or solutions in water and organic solvent mixtures, of a metal salt, preferably a salt of Zn(II) or Fe(II), and a polycyanometallate (salt), preferably containing Fe(III) or Co(III), and bringing tertiary butanol into contact with the bimetallic cyanide complex so obtained and removing the surplus solvent and tertiary butanol. In Reference Example 1, the surplus solvent and tertiary butanol are removed by suction filtration. The filter-cake obtained is washed with a 30 %wt tertiary butanol aqueous solution and filtered, and this is repeated. The filter cake is dried at 40 °C under reduced pressure and then pulverized.

Another process by which the DMC catalyst can be prepared, has been described in patent application WO 01/72418. The process described comprises the steps of:
(a) combining an aqueous solution of a metal salt with an aqueous solution of a metal cyanide salt and contacting these solutions, wherein at least part of this reaction takes place in the presence of an organic complexing agent, thereby forming a dispersion of a solid DMC complex in an aqueous medium;
(b) combining the dispersion obtained in step (a) with a liquid, which is essentially insoluble in water and which is capable of extracting the solid DMC complex formed in step (a) from the aqueous medium, and allowing a two-phase system to be formed consisting of a first aqueous layer and a layer containing the DMC complex and the liquid added;
(c) removing the first aqueous layer; and
(d) recovering the DMC catalyst from the layer containing the DMC catalyst.

DMC catalysts generally require an induction period before the catalyst becomes active. The catalyst is mixed with initiator, and traces of water and air are removed. Catalyst activation is verified following initial introduction of alkylene oxide by a noticeable pressure drop. Following activation, polymerization proceeds rapidly as additional alkylene oxide is added. Preactivated catalyst/initiator mixtures may be stored for later use provided that care is taken to exclude moisture, oxygen, etc. Low molecular weight initiators tend to have lengthy induction periods, and in some cases, with low molecular weight initiators such as water, ethylene glycol and propylene glycol, the DMC catalyst may not become activated, or is temporarily activated followed by deactivation.

Once activated, DMC catalysts tend to be less efficient when used with very low molecular weight initiator. Propylene glycol and water, for example, often oxyalkylate very sluggishly, and sometimes result in catalyst deactivation. For this reason, higher molecular weight initiators, for example those having molecular weights in the range of from 100 to 5000 are generally used. Such initiator may be prepared by traditional base catalysis. However, the basic catalyst must be scrupulously removed from these starters, as even traces of strong bases deactivate DMC catalysts.

It has now been found that alkoxylated initiator can be prepared by the process according to the present invention, which alkoxylated initiator can be used as such in a DMC catalysed process. Therefore, the process according to the present invention specifically relates to a process which comprises (i) contacting an initiator with alkylene oxide in the presence of hydrogen fluoride, and (ii) contacting the product of step (i) with alkylene oxide in the presence of a double metal cyanide complex catalyst. Generally, the alkoxylated initiator prepared in step (i) will have a number average molecular weight of from 100 to 10,000. More specifically, such alkoxylated initiator will generally have a number average molecular weight of at most 8,000, more specifically of at most 4000, most specifically at most 2000. Preferably, the alkoxylated initiator prepared according to the present invention has an average hydroxyl functionality of from 1 to 8 and a hydroxyl number of from 5 to 560 mg KOH/g.

The process according to the present invention makes it possible to send to step (ii) the product directly obtained from step (i). With "the product directly obtained from step (i)" is meant that the reaction product of step (i) is not materially changed before being reacted in step (ii), such as by removal of catalyst or other purification methods. However, the product obtained in step (i) can have been stored for some time after preparation before being contacted further in step (ii).

Furthermore, the present invention relates to compositions comprising polyether polyol obtainable by a process according to the present invention. Additionally, the present invention relates to compositions comprising polyether polyol and of from 0.0005 %wt to 10 %wt of hydrogen fluoride and of from 5 to 50 ppm of double metal cyanide complex catalyst, amounts based on total amount of composition.

The process of the present invention for preparing alkoxylated initiator can in general be carried out by the following procedure. Hydrogen fluoride, initiator, preferably glycerin, and optionally organic compound comprising silicon and/or boron, are introduced into a reaction vessel and brought to the desired reaction temperature, specifically of from 0 to 150 °C. It will be clear to someone skilled in the art that the reaction will proceed faster at higher temperature. Therefore, it is generally preferred to apply the process of the present invention at the higher side of this temperature range. The desired quantity of alkylene oxide is subsequently dosed into the reaction vessel by means of a pump. Preferably, a propoxylated glycerin oligomer is prepared having a number average molecular weight of from 100 to 2,000. This oligomer is then combined with a DMC catalyst, and further alkylene oxide is added. If the DMC catalysed process is carried out continuously, it is preferred to continuously add alkylene oxide optionally containing a small proportion of low molecular weight initiator such as water, propylene glycol or glycerin to produce a polyether polyol. After completion of the alkylene oxide addition and a post-reaction time at a predetermined temperature, volatile constituents may be removed by distillation. Subsequently, any desired antioxidant can be added.

The DMC catalysts are very active and hence exhibit high polymerisation rates. They are sufficiently active to allow their use at very low concentrations, such as 25 ppm or less. At such low concentrations, the catalyst can often be left in the products without an adverse effect on product quality.

The polyether polyols thus obtained can subsequently be reacted with further alkylene oxide, preferably ethylene oxide, in the presence of hydrogen fluoride in order to obtain an ethylene oxide tipped polyether polyol.

The polyether polyols which can be prepared by the process according to the present invention have been found suitable for the applications well known in the art for conventional alkylene oxide reaction products, such as the use of polyoxyalkylene polyether in polyurethanes either in plastics, surfactants and/or foams. Therefore, the present invention further relates to a process comprising reacting a polyether polyol composition according to the present invention with a compound containing at least 2 isocyanate groups optionally in the presence of blowing agent. Such compositions can contain further conventional additives such as polyurethane catalysts, which can be gellation catalysts and/or blowing catalysts, fillers, flame retardants, foam stabilisers (surfactants) and colourants.

The present invention is hereinafter exemplified.

### Example 1

A mechanically stirred reactor, immersed in a water bath, was charged with 45 grams of glycerol, 0.5 grams of hydrogen fluoride in 4.5 grams of glycerol and 0.25 grams of tetramethoxysilane ((MeO)4Si). In 4 hours, 250 grams of propylene oxide were added while the reaction mixture was kept at a temperature of between 40 and 60 °C. After stirring overnight, the reaction product was stripped with nitrogen.

The stripped product was 300 grams of a clear liquid having a weight average molecular weight of 550 and a primary hydroxyl content of 45% as determined by ¹H NMR after derivatisation with trifluoroacetylimidazole. The yield was 0.50 kg propylene oxide/g of hydrogen fluoride.

A mechanically stirred reactor was charged with 89.6 grams of the product obtained, and 40 milligrams of the DMC catalyst dispersion prepared as described in Example 1 of WO-A-01/72418. To this mixture was added 311 grams of propylene oxide in 150 minutes at a temperature of 130 °C. After this addition, 388 grams of propylene oxide and 12.2 grams of glycerol were added in 2 hours.

The reaction product obtained had a weight average molecular weight of about 3000 and a ratio of weight average molecular weight to number average molecular weight of 1.06. The hydroxyl number was 56 and the viscosity was 237 cSt (at 40 °C).

### Example 2

A mechanically stirred reactor immersed in a water bath was charged with 48.5 grams of grams of glycerol, 0.15 grams of hydrogen fluoride in 1.35 grams of glycerol and 0.13 grams of trimethylborate ((MeO)₃ B). In 4 hours, 270 grams of propylene oxide was added while the reaction mixture was kept at a temperature of between 40 and 60 °C. The reaction product was stripped with nitrogen at 60 °C.

The stripped product was 315 grams of a colourless liquid having a weight average molecular weight of 580. The yield was 1.77 kg propylene oxide/g of hydrogen fluoride.

A mechanically stirred reactor was charged with 65.5 grams of this product, and 12 milligrams of the DMC catalyst dispersion prepared as described in Example 1 of WO-A-01/72418. To this mixture was added 355 grams of propylene oxide in 300 minutes at a temperature of 130 °C. After this addition, 368 grams of propylene oxide and 9.2 grams of glycerol were added in 1.5 hours.

The reaction product obtained had a weight average molecular weight of 3000, a hydroxyl number of 56 and a viscosity of 375 cSt (at 40 °C).

### Example 3

A mechanically stirred reactor, cooled in a water bath, was charged with 51.3 g of polyether polyol prepared with the help of DMC catalyst. The polyether polyol was a propylene oxide adduct of glycerol having a molecular weight of 2769 and containing 20 ppm DMC catalyst (based on end product), prepared as described in Example 2 of WO-A-01/72418. Added were 0.58 grams of a solution of 5 grams of hydrogen fluoride in 45 grams of the same polyether polyol. Subsequently, 0.10 grams of trimethylborate was added. After homogenization, ethylene oxide was added such that the temperature did not exceed 30 °C. After 10.0 grams of ethylene oxide had been added, the temperature was raised to 60 °C and the mixture was stripped with nitrogen to remove residual ethylene oxide. It was found that the weight of the reaction vessel and contents had increased by 9.8 grams, after stripping. Subsequently, 1 ml of water was added at ambient temperature and the mixture was stirred for 10 minutes. 21 grams of toluene and 1 gram of silica gel were added and the mixture stirred for another 10 minutes. After filtration of the reaction product and evaporation of the solvent, a clear product was obtained. The weight average molecular weight (measured by gel permeation chromatography) had increased from the original 2769 to 3236 of the product. The molecular weight distribution (defined as the ratio of weight average molecular weight to number average molecular weight) of the product increased from 1.09 of the starting polyol to 1.43 for the product. The primary hydroxyl content was measured using nuclear magnetic resonance (NMR) in CDCl₃ and trifluoroacetylimidazole as a derivatisation agent, and amounted to 87-88%.

## Claims

1. Process comprising contacting initiator with alkylene oxide in the presence of hydrogen fluoride and a double metal cyanide complex catalyst.

2. Process according the claim 1, in which process the initiator is a hydroxyl-group containing initiator.

3. Process according to claim 1 or 2, which process comprises (i) contacting an initiator with alkylene oxide in the presence of hydrogen fluoride, and (ii) contacting the product of step (i) with alkylene oxide in the presence of a double metal cyanide complex catalyst.

4. Process according to claim 3, in which process the product of step (i) has a number average molecular weight of from 100 to 2,000.

5. Process according to claim 1 or 2, which process comprises (a) contacting initiator with alkylene oxide in the presence of a double metal cyanide complex catalyst, and (b) contacting the product of step (a) with alkylene oxide in the presence of hydrogen fluoride.

6. Process according to claim 5, in which process the alkylene oxide present in process step (b) is ethylene oxide, optionally in combination with a cyclic ether compound containing at least 3 carbon atoms in the ring structure.

7. Composition comprising polyether polyol obtainable by a process according to any one of claims 1 to 6.

8. Composition comprising polyether polyol and of from 0.0005 %wt to 10 %wt of hydrogen fluoride and of from 5 to 50 ppm of double metal cyanide complex catalyst, amounts based on total amount of composition.

9. Process comprising reacting a polyether polyol composition according to claim 7 or 8 with a compound containing at least 2 isocyanate groups optionally in the presence of blowing agent.

## Patentansprüche

1. Verfahren, umfassend das Inkontaktbringen eines Initiators mit Alkylenoxid in Gegenwart von Wasserstofffluorid und einem Doppelmetallcyanidkomplexkatalysator.

2. Verfahren nach Anspruch 1, in welchem Verfahren der Initiator ein eine Hydroxylgruppe enthaltender Initiator ist.

3. Verfahren nach Anspruch 1 oder 2, welches Verfahren (i) das Inkontaktbringen eines Initiators mit Alkylenoxid in Gegenwart von Wasserstofffluorid, und (ii) das Inkontaktbringen des Produkts aus Schritt (i) mit Alkylenoxid in Gegenwart eines Doppelmetallcyanidkomplexkatalysators umfasst.

4. Verfahren nach Anspruch 3, in welchem Verfahren das Produkt aus Schritt (i) ein zahlenmittleres Molekulargewicht von 100 bis 2000 besitzt.

5. Verfahren nach Anspruch 1 oder 2, welches Verfahren (a) das Inkontaktbringen des Initiators mit Alkylenoxid in Gegenwart eines Doppelmetallcyanidkomplexkatalysators, und (b) das Inkontaktbringen des Produkts von Schritt (a) mit Alkylenoxid in Gegenwart von Wasserstofffluorid umfasst.

6. Verfahren nach Anspruch 5, in welchem Verfahren das im Verfahrensschritt (b) vorhandene Alkylenoxid Ethylenoxid, wahlweise in Kombination mit einer cyclischen Etherverbindung mit wenigstens drei Kohlenstoffatomen in der Ringstruktur, ist.

7. Zusammensetzung, umfassend Polyetherpolyol, erhältlich durch ein Verfahren nach einem der Ansprüche 1 bis 6.

8. Zusammensetzung, umfassend Polyetherpolyol und 0,0005 Gew.-% bis 10 Gew.-% Wasserstofffluorid und 5 bis 50 ppm Doppelmetallcyanidkomplexkatalysator, wobei die Mengen auf der Gesamtmenge der Zusammensetzung beruhen.

9. Verfahren, umfassend das Umsetzen einer Polyetherpolyolzusammensetzung nach Anspruch 7 oder 8, mit einer Verbindung, welche wenigstens 2 Isocyanatgruppen enthält, wahlweise in Gegenwart eines Treibmittels.

## Revendications

1. Procédé comprenant la mise en contact d'un initiateur avec de l'oxyde d'alkylène en présence de fluorure d'hydrogène et d'un catalyseur complexe de cyanure métallique double.

2. Procédé selon la revendication 1, dans lequel l'initiateur est un initiateur contenant un groupement hydroxyle.

3. Procédé selon la revendication 1 ou 2, lequel procédé comprend (i) la mise en contact d'un initiateur avec de l'oxyde d'alkylène en présence de fluorure d'hydrogène, et (ii) la mise en contact du produit de l'étape (i) avec de l'oxyde d'alkylène en présence d'un catalyseur complexe de cyanure métallique double.

4. Procédé selon la revendication 3, dans lequel le produit de l'étape (i) a un poids moléculaire moyen en nombre de 100 à 2000.

5. Procédé selon la revendication 1 ou 2, lequel procédé comprend (a) la mise en contact d'un initiateur avec de l'oxyde d'alkylène en présence d'un catalyseur complexe de cyanure métallique double et (b) la mise en contact du produit de l'étape (a) avec de l'oxyde d'alkylène en présence de fluorure d'hydrogène.

6. Procédé selon la revendication 5, dans lequel l'oxyde d'alkylène présent dans l'étape de traitement (b) est l'oxyde d'éthylène, éventuellement en combinaison avec un composé d'éther cyclique contenant au moins 3 atomes de carbone dans la structure cyclique.

7. Composition comprenant du polyétherpolyol qui peut être obtenu par un procédé selon l'une quelconque des revendications 1 à 6.

8. Composition comprenant du polyétherpolyol et 0,0005 % en poids à 10 % en poids de fluorure d'hydrogène et 5 à 50 ppm de catalyseur complexe de cyanure métallique double, quantités basées sur la quantité totale de la composition.

9. Procédé comprenant la réaction d'une composition de polyétherpolyol selon la revendication 7 ou 8 avec un composé contenant au moins 2 groupements isocyanate éventuellement en présence d'un agent gonflant.
